(19) Europäisches Patentamt
European Patent Office
Office européen des brevets

(11) Veröffentlichungsnummer : **0 401 677 B1**

(12) **EUROPÄISCHE PATENTSCHRIFT**

(45) Veröffentlichungstag der Patentschrift : **16.06.93 Patentblatt 93/24**

(51) Int. Cl.$^5$ : **A01N 47/36,** // (A01N47/36, 37:40)

(21) Anmeldenummer : **90110329.1**

(22) Anmeldetag : **31.05.90**

# (54) Herbizide Mittel.

(30) Priorität : **05.06.89 DE 3918288**

(43) Veröffentlichungstag der Anmeldung : **12.12.90 Patentblatt 90/50**

(45) Bekanntmachung des Hinweises auf die Patenterteilung : **16.06.93 Patentblatt 93/24**

(84) Benannte Vertragsstaaten : **AT BE CH DE DK ES FR GB GR IT LI NL SE**

(56) Entgegenhaltungen :
**EP-A- 0 131 258**
**EP-A- 0 252 237**
**EP-A- 0 298 901**

(73) Patentinhaber : **HOECHST AKTIENGESELLSCHAFT**
**Postfach 80 03 20**
**W-6230 Frankfurt am Main 80 (DE)**

(72) Erfinder : **Schumacher, Hans, Dr.**
**Claudiusstrasse 4**
**W-6093 Flörsheim am Main (DE)**
Erfinder : **Huff, Hans Philipp, Dr.**
**Eberlestrasse 18**
**W-6239 Eppstein/Taunus (DE)**
Erfinder : **Hacker, Erwin, Dr.**
**Margarethenstrasse 16**
**W-6203 Hochheim am Main (DE)**

EP 0 401 677 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Gegenstand der Erfindung sind herbizide Mittel, die die Verbindung 3-(4,6-Dimethoxy-2-pyrimidinyl)-1-[(N-methyl-N-methylsulfonyl)aminosulfonyl]-harnstoff der Formel

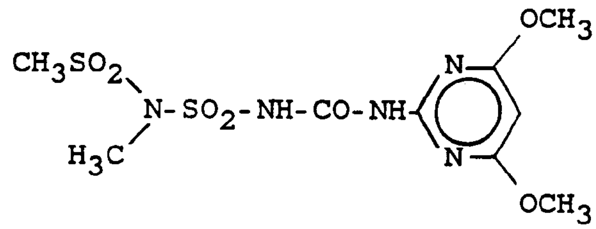

(I)

in Kombination mit Ioxynil (3,5-Dijod-4-hydroxybenzonitril; II) und/oder Bromoxynil (3,5-Dibrom-4-hydroxybenzonitril; III) enthalten.

Der Wirkstoff I ist bekannt aus EP-A 131 258 (US-A 4,601,747). Ioxynil und Bromoxynil sind seit langem als herbizide Handelsprodukte in Gebrauch und beispielsweise in "Pesticide Manual", 7. Auflage 1983 oder 8. Auflage 1987, The British Crop Protection Council, London, ausführlich beschrieben.

Die Verbindungen der Formel II und III werden in Form ihrer handelsüblichen Derivate, beispielsweise als Octanoate oder als Na- und K-Salze eingesetzt. Überraschenderweise zeigen die erfindungsgemäßen Kombinationen bei der Anwendung einen überadditiven (synergistischen) Effekt, der aufgrund der Wirkung der Einzelkomponenten nicht zu erwarten war.

Die Mischungsverhältnisse der Komponenten I und II bzw. III können innerhalb weiter Grenzen schwanken, ohne daß die synergistische Wirkung verlorengeht. Die Mischungsverhältnisse können z. B. zwischen 1 : 1 und 1 : 100, vorzugsweise zwischen 1 : 2 und 1 : 60 variieren.

Die Aufwandmengen der erfindungsgemäßen Wirkstoffmischungen liegen in der Regel zwischen 0,07 und 1,0 kg/ha, vorzugsweise 0,1 bis 1 kg/ha. Für Freilandapplikation ist die Aufwandmenge vorzugsweise zwischen 0,2 bis 1 kg/ha.

Bezüglich Verbindung I ist die Aufwandmenge vorzugsweise zwischen 5 g/ha und 50 g/ha. Von den Verbindungen II und III werden vorzugsweise 50 bis 500 g/ha eingesetzt.

Die erfindungsgemäßen Kombinationen können zur Bekämpfung zahlreicher ein- und mehrjähriger Unkräuter eingesetzt werden, wie z. B. gegen Galium aparine (Klettenlabkraut), Stellaria media (Sternmire), Matricaria sp. (Kamille), Sinapis sp. (Ackersenf) und anderer. Aufgrund ihrer Unschädlichkeit gegenüber Kulturpflanzen können sie zur selektiven Bekämpfung von Unkräutern in zahlreichen Nutzpflanzenkulturen, insbesondere in Reis, Weizen, Gerste und Hafer, eingesetzt werden.

Die erfindungsgemäßen Mittel können in den üblichen, dem Fachmann geläufigen Zubereitungen, z. B. als benetzbare Pulver, Stäubemittel, Granulate, Dispersionskonzentrate, emulgierbare Konzentrate oder versprühbare Lösungen, in den Handel gebracht werden. Die formulierten Mittel enthalten dabei die Wirkstoffe im allgemeinen in Konzentrationen von 2 bis 95 Gew.-%.

Diese einzelnen Formulierungstypen sind im Prinzip bekannt und werden beispielsweise beschrieben in: Winnacker-Küchler, "Chemische Technologie", Band 7, C. Hauser Verlag München, 4. Aufl. 1986; van Falkenberg, "Pesticides Formulations", Marcel Dekker N.Y., 2nd Ed. 1972-73; K. Martens, "Spray Drying Handbook, 3rd Ed. 1979, G. Goodwin Ltd. London.

Die notwendigen Formulierungshilfsmittel wie Inertmaterialien, Tenside, Lösungsmittel und weitere Zusatzstoffe sind ebenfalls bekannt und werden beispielsweise beschrieben in: Watkins "Handbook of Insecticide Dust Diluents and Carriers", 2nd Ed., Darland Books, Caldwell N.J.; H.v. Olphen, "Introduction to Clay Colloid Chemistry"; 2nd Ed., J. Wiley & Sons, N.Y.; Marschen, "Solvents Guide", 2nd Ed., Interscience, N.Y. 1950; McCutcheon's "Detergents and Emulsifiers Annual", MC Publ. Corp., Ridgewood N.J.; Sisley and Wood, "Encyclopedia of Surface Active Agents", Chem. Publ. Co. Inc., N.Y. 1964; Schönfeldt, "Grenzflächenaktive Äthylenoxidaddukte", Wiss. Verlagsgesell., Stuttgart 1976; Winnacker-Küchler, "Chemische Technologie", Band 7, C. Hauser Verlag München, 4. Aufl. 1986.

Auf der Basis dieser Formulierungen lassen sich auch Kombinationen mit anderen pestizid wirksamen Stoffen, Düngemitteln und/oder Wachstumsregulatoren herstellen, z.B. in Form einer Fertigformulierung oder als Tankmix.

Benetzbare Pulver sind in Wasser gleichmäßig dispergierbare Präparate, die neben dem Wirkstoff außer einem Verdünnungs- oder Inertstoff noch Netzmittel, z.B. polyoxyethylierte Alkylphenole, polyoxethylierte

Fettalkohole oder polyoxethylierte Fettamine, Alkansulfonate oder Alkylbenzolsulfonate und Dispergiermittel, z.B. ligninsulfonsaures Natrium, 2,2'-dinaphthylmethan-6,6'-disulfonsaures Natrium, dinaphthylmethandisulfonsaures Natrium, dibutylnaphthyl-sulfonsaures Natrium oder auch oleylmethyltaurinsaures Natrium enthalten.

Emulgierbare Konzentrate werden durch Auflösen des Wirkstoffes in einem organischen Lösungsmittel z.B. Butanol, Cyclohexanon, Dimethylformamid, Xylol oder auch höhersiedenden Aromaten oder Kohlenwasserstoffen unter Zusatz von einem oder mehreren Emulgatoren hergestellt. Als Emulgatoren können beispielsweise verwendet werden: Alkylarylsulfonsaure Calzium-Salze, wie Ca-dodecylbenzolsulfonat, oder nichtionische Emulgatoren wie Fettsäurepolyglykolester, Alkylarylpolyglykolether, wie polyoxethylierte Alkylphenole, Fettalkoholpolyglykolether, Propylenoxid-Ethylenoxid-Kondensationsprodukte, Alkylpolyether, polyethoxylierte Fettamine, wie polyethoxyliertes Oleyl- oder Stearylamin, Sorbitanfettsäureester, Polyoxyethylensorbitanfettsäureester oder Polyoxethylensorbitester.

Stäubemittel erhält man durch Vermahlen des Wirkstoffes mit fein verteilten festen Stoffen, z.B. Talkum, natürlichen Tonen wie Kaolin, Bentonit, Pyrophillit oder Diatomeenerde. Boden- bzw. Streugranulat können entweder durch Verdüsen des Wirkstoffes auf adsorptionsfähiges, granuliertes Inertmaterial hergestellt werden oder durch Aufbringen von Wirkstoffkonzentraten mittels Klebemitteln, z.B. Polyvinylalkohol, polyacrylsaurem Natrium oder auch Mineralölen, auf die Oberfläche von Trägerstoffen wie Sand, Kaolinite oder von granuliertem Inertmaterial. Auch können geeignete Wirkstoffe in der für die Herstellung von Düngemittelgranulaten üblichen Weise - gewünschtenfalls in Mischung mit Düngemitteln - granuliert werden.

In benetzbaren Pulvern variiert die Gesamt-Wirkstoffkonzentration zwischen etwa 10 % und 95 %, der Rest besteht aus den oben angegebenen Formulierungszusätzen. Bei emulgierbaren Konzentraten beträgt die Wirkstoffkonzentration etwa 10 % bis 80 %. Staubförmige Formulierungen enthalten meistens 5 % bis 20 % an Wirkstoffen, versprühbare Lösungen etwa 2 % bis 20 %. Bei Granulaten hängt der Wirkstoffgehalt zum Teil davon ab, in welcher Form (flüssig oder fest) die Wirkstoffe vorliegen und welche Granulierhilfsmittel, Füllstoffe usw. verwendet werden.

Im allgemeinen liegt der Gehalt bei den in Wasser dispergierbaren Granulaten zwischen 10 und 90 Gew.-%.

Daneben enthalten die genannten Wirkstofformulierungen gegebenenfalls die jeweils üblichen Haft-, Netz-, Dispergier-, Emulgier-, Penetrations-, Lösungsmittel, Füll- oder Trägerstoffe.

Zur Anwendung werden die in handelsüblicher Form vorliegenden Formulierungen gegebenenfalls in üblicher Weise verdünnt, z.B. bei Spritzpulvern, emulgierbaren Konzentraten, Dispersionen und wasserdispergierbaren Granulaten mittels Wasser. Staubförmige Zubereitungen, Boden- bzw. Streugranulate sowie versprühbare Lösungen werden vor der Anwendung üblicherweise nicht mehr mit weiteren inerten Stoffen verdünnt.

Die erfindungsgemäßen Kombinationen der Wirkstoffe I und II (III) können im Vorauflauf- oder im Nachauflaufverfahren angewendet werden. Dabei werden die Wirkstoffe I und II bzw. III einzeln nacheinander oder gemeinsam auf die Pflanzen oder deren Anbaufläche aufgebracht. Bevorzugt ist die Anwendung im Nachauflaufverfahren.

Mit den äußeren Bedingungen wie Temperatur, Feuchtigkeit, der Art des verwendeten Herbizids, u.a. variiert die erforderliche Aufwandmenge der Verbindungen der Formel (I).

Auch Mischungen oder Mischformulierungen mit anderen Wirkstoffen, wie z.B. Insektiziden, Akariziden, Herbiziden, Düngemitteln, Wachstumsregulatoren oder Fungiziden sind gegebenenfalls möglich.

Folgende Beispiele dienen zur Erläuterung der Erfindung:

## A. Formulierungsbeispiele

a) Ein Stäubemittel wird erhalten, indem man 10 Gewichtsteile Wirkstoffgemisch und 90 Gewichtsteile Talkum als Inertstoff mischt und in einer Schlagmühle zerkleinert.

b) Ein in Wasser leicht dispergierbares, benetzbares Pulver wird erhalten, indem man 25 Gewichtsteile Wirkstoffgemisch, 64 Gewichtsteile kaolinhaltiges Quarz als Inertstoff, 10 Gewichtsteile ligninsulfonsaures Kalium und 1 Gewichtsteil oleoylmethyltaurinsaures Natrium als Netz- und Dispergiermittel mischt und in einer Stiftmühle mahlt.

c) Ein in Wasser leicht dispergierbares Dispersionskonzentrat wird erhalten, indem man 20 Gewichtsteile Wirkstoffgemisch mit 6 Gewichtsteilen Alkylphenolpolyglykolether (®Triton X 207), 3 Gewichtsteilen Isotridecanolpolyglykolether (8 AeO) und 71 Gewichtsteilen paraffinischem Mineralöl (Siedebereich z. B. ca. 255 bis 377°C) mischt und in einer Reibkugelmkühle auf eine Feinheit von unter 5 Mikron vermahlt.

d) Ein emulgierbares Konzentrat wird erhalten aus 15 Gewichtsteilen Wirkstoffgemisch, 75 Gewichtsteilen Cyclohexanon als Lösungsmittel und 10 Gewichtsteilen oxethyliertem Nonylphenol (10 AeO) als Emulgator.

e) Ein in Wasser dispergierbares Granulat wird erhalten, indem man

| | | |
|---|---|---|
| 75 | Gewichtsteile | Wirkstoffgemisch, |
| 10 | " | ligninsulfonsaures Calcium, |
| 5 | " | Natriumlaurylsulfat, |
| 3 | " | Polyvinylalkohol und |
| 7 | " | Kaolin |

mischt, auf einer Stiftmühle mahlt und das Pulver in einem Wirbelbett durch Aufsprühen von Wasser als Granulierflüssigkeit granuliert.

f) Ein in Wasser dispergierbares Granulat wird auch erhalten, indem man

| | | |
|---|---|---|
| 25 | Gewichtsteile | Wirkstoffgemisch, |
| 5 | " | 2,2'-dinaphthylmethan-6,6'-disulfonsaures Natrium |
| 2 | " | oleolymethyltaurinsaures Natrium, |
| 1 | " | Polyvinylalkohol, |
| 17 | " | Calciumcarbonat und |
| 50 | " | Wasser |

auf einer Kolloidmühle homogenisiert und vorzerkleinert, anschließend auf einer Perlmühle mahlt und die so erhaltene Suspension in einem Sprühturm mittels einer Einstoffdüse zerstäubt und trocknet.

g) Ein Extruder-Granulat erhält man, indem man 20 Gewichtsteile Wirkstoffgemisch, 3 Gewichtsteile ligininsulfonsaures Natrium, 1 Gewichtsteil Carboxymethylcellulose und 76 Gewichtsteile Kaolin vermischt, vermahlt und mit Wasser anfeuchtet. Dieses Gemisch wird extrudiert und anschließend in Luftstrom getrocknet.

## B. Biologische Beispiele

Die nachfolgenden Versuche wurden unter Gewächshausbedingungen durchgeführt.

In allen Fällen wurde bei den Kombinationen unterschieden zwischen dem errechneten und dem gefundenen Wirkungsgrad.

Der errechnete, theoretisch zu erwartende Wirkungsgrad einer Kombination wird ermittelt nach der Formel von S.R. Colby: Calculation of synergistic and antagonistic responses of herbicide combinations, Weeds <u>15</u>, (1967), 20 - 22.

Diese Formel lautet

$$E = X + Y - \frac{X \times Y}{100}$$

wobei

X = % Schädigung durch Herbizid A bei X kg/ha Aufwandmenge;

Y = % Schädigung durch Herbizid B bei Y kg/ha Aufwandmenge;

E = die zu erwartende Schädigung durch die Herbizide A + B bei X + Y kg/ha Aufwandmenge bedeuten.

Ist die tatsächliche Schädigung größer als die rechnerisch zu erwartende, so ist die Wirkung der Kombination mehr als additiv, d. h. es liegt ein synergistischer Wirkungseffekt vor.

## Versuchsdurchführung

Die Testpflanzen wurden im Gewächshaus in Töpfen angezogen.

Die Applikation der Wirkstoffe erfolgte jeweils allein oder in Kombinationen (Tank-Mischungen) in den angegebenen Dosierungen als der Weizen (Triticum aestivum), die Gerste (Hordeum vulgare) und der Hafer (Avena sativa) das 4 - 5 Blattstadium, Galium aparine, Stellaria media und Matricaria chamomilla 5 - 10 cm Wuchshöhe erreicht hatten. 3 Wochen nach der Applikation wurde die herbizide Wirkung durch Bonitur der Pflanzen bewertet. Die Angaben beziehen sich auf %-Werte der Schädigung. Die Ergebnisse sind in der nachfolgenden Tabelle wiedergegeben, wobei die Werte in Klammern den nach der Colby-Formel errechneten Erwartungswerten entsprechen.

**Tabelle 1**

| Wirkstoff | Dosis g AS/ha | Schädigung in % bei Galium aparine | Stellaria media | Matricaria chamonilla | Triticum aestivum | Hordeum vulgare | Avena sativa |
|---|---|---|---|---|---|---|---|
| I | 5 | 26 | 20 | 10 | 0 | 0 | 0 |
| | 7,5 | 35 | 27 | 18 | 0 | 0 | 0 |
| | 10 | 40 | 35 | 25 | 0 | 0 | 0 |
| | 15 | 48 | 43 | 35 | 0 | 0 | 0 |
| | 25 | 60 | 55 | 50 | 0 | 0 | 0 |
| II | 50 | 25 | 30 | 30 | 0 | 0 | 0 |
| | 75 | 33 | 40 | 38 | 0 | 0 | 0 |
| | 150 | 40 | 55 | 45 | 0 | 0 | 0 |
| | 300 | 65 | 70 | 70 | 0 | 0 | 0 |
| III | 50 | 30 | 10 | 35 | 0 | 0 | 0 |
| | 75 | 37 | 15 | 40 | 0 | 0 | 0 |
| | 150 | 45 | 30 | 50 | 0 | 0 | 0 |
| | 300 | 68 | 45 | 75 | 0 | 0 | 0 |
| I + II | 25 + 50 | 88 (70) | 90 (69) | 82 (65) | 0 | 0 | 0 |
| | 15 + 75 | 84 (69) | 86 (66) | 76 (60) | 0 | 0 | 0 |
| | 7,5 +150 | 79 (61) | 87 (53) | 70 (55) | 0 | 0 | 0 |
| | 7,5 +300 | 100 (78) | 100 (79) | 95 (76) | 0 | 0 | 0 |
| | 5 +300 | 95 (75) | 93 (76) | 90 (73) | 0 | 0 | 0 |
| I + III | 25 + 50 | 92 (72) | 69 (60) | 89 (68) | 0 | 0 | 0 |
| | 15 + 75 | 89 (68) | 63 (52) | 80 (61) | 0 | 0 | 0 |
| | 7,5 +150 | 83 (65) | 59 (49) | 77 (59) | 0 | 0 | 0 |
| | 7,5 +300 | 100 (80) | 78 (60) | 100 (80) | 0 | 0 | 0 |
| | 5 +300 | 98 (77) | 70 (54) | 88 (78) | 0 | 0 | 0 |

## Patentansprüche

1. Herbizide Mittel, gekennzeichnet durch einen Gehalt an einer synergistisch wirkenden Mischung von 3-(4,6-Dimethoxy-2-pyrimidinyl)-1-[(N-methyl-N-methylsulfonyl)aminosulfonyl]-harnstoff der Formel

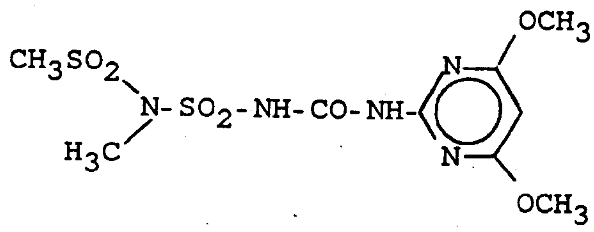

(I)

in Kombination mit Ioxynil (II) und/oder Bromoxynil (III).

2. Herbizide Mittel gemäß Anspruch 1, dadurch gekennzeichnet, daß sie die Wirkstoffe I und II bzw. III im Gewichtsverhältnis 1 : 1 bis 1 : 100 enthalten.

3. Herbizide Mittel nach Anspruch 2, dadurch gekennzeichnet, daß das Gewichtsverhältnis I : II (III) 1 : 2 bis 1 : 60 beträgt.

4. Herbizide Mittel nach Anspruch 1, 2 oder 3, dadurch gekennzeichnet, daß sie 2-95 Gew.-% Wirkstoffgemisch und 98-5 Gew.-% übliche Formulierungshilfsmittel für Zubereitungen aus der Gruppe der benetzbaren Pulver, Stäubemittel, Granulate oder versprühbaren Lösungen enthalten.

5. Verfahren zur selektiven oder nicht-selektiven Unkrautbekämpfung, dadurch gekennzeichnet, daß man auf die zu behandelnden Pflanzen oder deren Anbauflächen eine wirksame Menge einer synergistischen Mischung bestehend aus der Verbindung der Formel I in Kombination mit Verbindungen der Formel II und-/oder III aufbringt.

6. Verfahren gemäß Anspruch 5, dadurch gekennzeichnet, daß die synergistische Mischung die Wirkstoffe I und II (III) im Gewichtsverhältnis 1 : 1 bis 1 : 100 enthält.

7. Verfahren nach Anspruch 6, dadurch gekennzeichnet, daß das Gewichtsverhältnis I : II (III) 1 : 2 bis 1 : 60 beträgt.

8. Verfahren gemäß Anspruch 5, 6 oder 7, dadurch gekennzeichnet, daß man die synergistische Mischung in einer Aufwandmenge von 0,07 bis 1,0 kg/ha aufbringt.

9. Verfahren gemäß Anspruch 8, dadurch gekennzeichnet, daß die Aufwandmenge 0,1 bis 1 kg/ha beträgt.

10. Verwendung einer Kombination der Verbindungen der Formel I und II und/oder III zur selektiven oder nichtselektiven Unkrautbekämpfung.

## Claims

1. A herbicidal agent which contains a synergistic mixture of 3-(4,6-dimethoxy-2-pyrimidinyl)-1-[(N-methyl-N-methylsulfonyl)aminosulfonyl]-urea of the formula

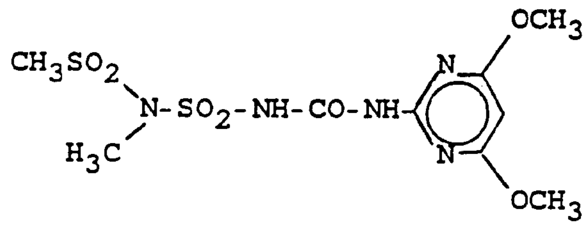

(I)

in combination with ioxynil (II) and/or bromoxynil (III).

2. A herbicidal agent as claimed in claim 1, which contains the active compounds I and II (III) in a weight ratio of 1 : 1 to 1 : 100.

3. A herbicidal agent as claimed in claim 2, in which the weight ratio of I : II (III) is 1 : 2 to 1 : 60.

4. A herbicidal agent as claimed in any one of claims 1, 2 and 3, which contains 2-95% by weight of active compound mixture and 98-5% by weight of customary formulation auxiliaries for formulations from the group comprising wettable powders, dusting agents, granules and solutions for spraying.

5. A method of selectively or non-selectively controlling weeds, which comprises applying an effective amount of a synergistic mixture comprising the compound of the formula I in combination with compounds of the formula II and/or III to the plants to be treated or to their cultivation areas.

6. The method as claimed in claim 5, wherein the synergistic mixture contains the active compounds I and II (III) in a weight ratio of 1 : 1 to 1 : 100.

7. The method as claimed in claim 6, wherein the weight ratio of I : II (III) is 1 : 2 to 1 : 60.

8. The method as claimed in either of claims 6 and 7, wherein the synergistic mixture is applied in an application amount of 0.07 to 1.0 kg/ha.

9. The process as claimed in claim 8,
wherein the application amount is 0.1 to 1 kg/ha.

10. The use of a combination of the compounds of the formula I and II and/or III for selectively or non-selectively controlling weeds.

## Revendications

1. Herbicides, caractérisés en ce qu'ils contiennent un mélange ayant une action synergique de 3-(4,6-diméthoxy-2-pyrimidinyl)-1-[(N-méthyl-N-méthylsulfonyl)-amino-sulfonyl]-urée répondant à la formule :

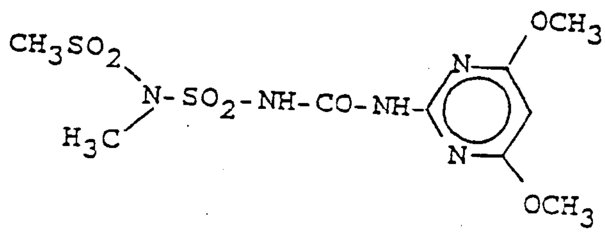

(I)

en association avec l'Ioxynil (II) et/ou le Bromoxynil (III).

**2.** Herbicides selon la revendication 1, caractérisés en ce qu'ils contiennent les substances actives I et II ou 111 dans le rapport pondéral de 1:1 à 1:100.

**3.** Herbicides selon la revendication 2, caractérisés en ce que le rapport pondéral I:II (III) est de 1:2 à 1:60.

**4.** Herbicides selon les revendications 1, 2 ou 3, caractérisés en ce qu'ils contiennent 2 à 95 % en poids de mélange de substances actives et 98-5 % en poids d'adjuvants de formulation habituels pour des préparations choisies parmi les poudres mouillables, les produits pour poudrage, les granulés ou les solutions pulvérisables.

**5.** Procédé pour la lutte sélective ou non sélective contre les mauvaises herbes, caractérisé en ce qu'on applique sur les plantes à traiter ou sur leurs surfaces de culture une quantité active d'un mélange synergique constitué du composé répondant à la formule I associé à des composés répondant aux formules II et/ou III.

**6.** Procédé selon la revendication 5, caractérisé en ce que le mélange synergique contient les substances actives I et II (III) dans le rapport pondéral 1:1 à 1:100.

**7.** Procédé selon la revendication 6, caractérisé en ce que le rapport pondéral I:II (III) est de 1:2 à 1:60.

**8.** Procédé selon les revendications 5, 6 ou 7, caractérisé en ce que l'on applique le mélange synergique dans une quantité d'application de 0,07 à 1,0 kg/ha.

**9.** Procédé selon la revendication 8, caractérisé en ce que la quantité appliquée est de 0,1 à 1 kg/ha.

**10.** Utilisation d'une association des composés répondant aux formules I et II et/ou III pour la lutte sélective ou non sélective contre les mauvaises herbes.